# EUROPÄISCHE PATENTSCHRIFT

(11) **EP 1 229 779 B1**
(45) Veröffentlichungstag und Bekanntmachung des Hinweises auf die Patenterteilung: **18.06.2003**
(21) Anmeldenummer: 00971335.5
(22) Anmeldetag: 07.10.2000
(51) Int. Cl.: A01D 61/00

(54) **QUERFÖRDERSCHNECKE FÜR EINEN MÄH- ODER MAISERNTEVORSATZ**
TRANSVERSAL CONVEYOR WORM FOR A MOWING OR MAIZE HARVESTING ATTACHMENT
HELICE TRANSPORTEUSE TRANSVERSALE POUR OUTIL DE MOISSON OU DE RECOLTE DE MAIS

(30) Priorität: 03.11.1999 DE 19952837
(43) Veröffentlichungstag der Anmeldung: 14.08.2002
(73) Patentinhaber: CLAAS Saulgau GmbH, 88348 Bad Saulgau (DE)
(72) Erfinder: GEBELE, Josef, D-88374 Hosskirch (DE); PRENZLER, Jürgen, D-88377 Oberwaldhausen (DE)
(86) Internationale Anmeldenummer: EP0009822
(87) Internationale Veröffentlichungsnummer: WO01031995

(56) Entgegenhaltungen:
- EP-A- 0 557 702
- EP-A- 0 847 684
- DE-A- 1 901 155
- FR-A- 2 482 934
- FR-A- 2 767 450
- GB-A- 866 318
- US-A- 1 780 481
- US-A- 1 841 718
- US-A- 1 972 031
- US-A- 3 060 665
- US-A- 5 845 472

## Beschreibung

Die Erfindung betrifft eine Querförderschnecke für einen Mäh- oder Maiserntevorsatz gemäß dem Oberbegriff des Anspruchs 1.

Die DE-A-195 23 255 (Siehe auch US-A-1 972 031) offenbart einen gattungsgleichen Maiserntevorsatz, dessen Querförderorgan als eine einen zylindrischen Grundkörper aufweisende Querförderschnecke ausgebildet ist, deren Grundkörper bereichsweise von gegenläufige Steigung und konstante Höhe aufweisenden Schneckengängen umlaufen wird. Frontseitig sind dem Querförderorgan mehrere um vertikale Achsen umlaufende Schneid- und Förderrotoren zugeordnet, die das Erntegut im Arbeitsbereich von dem im Boden verbleibenden Reststengel trennen und aus dem Arbeitsbereich abfördern. Zur Übergabe des Erntegutes an das Querförderorgan, sind den Schneid- und Förderrotoren im rückwärtigen Bereich ebenfalls um vertikale Achsen umlaufende Ausräumer zugeordnet, die das stengelige Erntegut aus den Schneid- und Förderrotoren herausbewegen und entweder direkt dem Querförderorgan oder den Abstand zwischen den Ausräumern und dem Querförderorgan überbrückenden Zwischenförderkegeln zuführen. Aufgrund dessen, daß die Schneckengänge des Querförderorgans konstante Höhe aufweisen, die Anordnung der Schneidund Förderrotoren sowie der Ausräumer und Zwischenförderkegel zur Querförderschnecke mit in Fahrtrichtung gesehen unterschiedlichem Abstand zu den Schneckengängen erfolgt, bilden sich zwischen der Querförderschnecke und dem rückwärtigen Bereich der einzelnen Arbeitsorgane unterschiedlich große Freiräume aus. Das von den Ausräumern oder Zwischenförderkegeln transportierte Erntegut muß zuerst diese unterschiedlich großen Freiräume ausfüllen, bevor es durch die Schneckengänge der Querförderschnecke erfaßt und abgefördert werden kann. Dies hat neben einer ungleichmäßigen Beschickung der Querförderschnecke auch zur Folge, daß im Bereich der großen Freiräume nur solange ein sicheres Erfassen des Erntegutes durch die Schneckengänge der Querförderschnecke gewährleistet ist, solange durch die Arbeitsorgane weiteres Erntegut nachgefördert wird. Unterbleibt die Zuführung von Erntegut durch die Arbeitsorgane aufgrund von Bestandsschwankungen oder beim Erreichen des Ernteflächenendes, verschlechtert sich das Erfassen des Erntegutes durch die Schneckengänge der Querförderschnecke, wobei im ungünstigsten Fall die Situation eintreten kann, daß das in diesem Freiraum befindliche Erntegut nur noch durch Eingreifen von außen den Schneckengängen zuführbar ist. Dies führt neben einem höheren Aufwand zur Beseitigung der Gutanhäufungen in diesen Freiräumen zu einer Verringerung der durchschnittlichen Flächenleistung aufgrund zunehmender Stillstandsphasen. Ferner kann ein zu großer Abstand der Zwischenförderkegel zu den Schneckengängen der Querförderschnecke dazu führen, daß die Mitnahmeelemente der Zwischenförderkegel einen Teil der Erntegutstengel wieder aus dem Übergabebereich zwischen Querförderschnecke und Zwischenförderkegel abfördern und gutflußbehindernd nochmals den ihnen vorgeordneten Arbeitsorganen zuführen.
Aufgrund dessen, daß die in der DE-OS 195 23 255 offenbarte Querförderschnecke von einem zylindrischen Grundkörper und diesen mit konstanter Höhe umlaufenden Schneckengängen gebildet wird, sind die von den Schneckengängen und dem Grundkörper begrenzten Gutförderräume und die erreichbare Gutgeschwindigkeit im Bereich der Querförderschnecke stets gleich groß. Bei einer derartig ausgeführten Querförderschnecke nimmt die Befüllung der Gutförderräume mit jedem neu hinzukommenden Erntegutstrom zu. Die nun dichter aneinanderliegenden Erntegutstengeln können zu intensiveren Reibvorgängen untereinander sowie zwischen sich und der Querförderschnecke führen, deren Folge ein erhöhter Verschleiß der Schneckengänge oder des Grundkörpers der Querförderschnecke ist.

Der Erfindung liegt deshalb die Aufgabe zugrunde, ein Querförderorgan für einen Mäh- oder Maiserntevorsatz so auszubilden, daß sich zwischen den Mitnahmeelementen des Querförderorgans und den ihnen vorgeordneten Arbeitsorganen nur geringe Freiräume ergeben, sodaß unabhängig vom Erntegutdurchsatz stets eine sichere Annahme des Erntegutes durch die Mitnahmeelemente des Querförderorgans gewährleistet ist und die Förderung des Erntegutes durch das Querförderorgan reibungsarm und damit verschleißminimiert erfolgt.

Erfindungsgemäß wird die Aufgabe durch eine Querförderschnecke für einen Mäh- oder Maiserntevorsatz mit den kennzeichnenden Merkmalen des Anspruchs 1 gelöst.

Indem die radial außenliegenden Kanten der Schneckengänge des Grundkörpers eine sich wenigstens teilweise in ihrem Querschnitt ändernde Hüllfläche beschreiben, wird eine Förderschneckenform erreicht, die in Abhängigkeit vom Hüllflächenquerschnitt eine Vergrößerung oder Verkleinerung des Guteinzugsbereiches und der sich zwischen den Schneckengängen und dem Grundkörper ausbildenden Gutförderäume ermöglicht. Auf diese Weise kann einerseits der Abstand der die Hüllfläche beschreibenden Schneckengänge zu den ihnen vorgeordneten Arbeitsorganen verändert werden, sodaß stets eine sichere Annahme des Erntegutes durch die Schneckengänge gewährleistet ist. Zum anderen kann die Größe der Gutförderräume an die von ihnen zu fördernde Erntegutmenge angepaßt werden, um eine reibungsarme und damit verschleißminimierte Erntegutförderung im Bereich des Querförderorgans zu erreichen.

In einer vorteilhaften Weiterbildung der Erfindung können die den Grundkörper umlaufenden Schneckengänge eine Hüllfläche ausbilden, die der Außenkontur des rückwärtigen Bereichs der den Schneckengängen vorgeordneten Arbeitsorgane mit geringem Abstand folgt. Auf diese Weise bilden sich zwischen den Schneckengängen der Querförderschnecke und den vorgeordneten Arbeitsorganen nur geringe Freiräume aus, die unabhängig vom Erntegutdurchsatz stets ein Erfassen des in diesen Freiräumen befindlichen Erntegutes durch die Schneckengänge der Querförderschnecke ermöglichen.

In Abhängigkeit von der Anordnung der Arbeitsorgane quer zur Fahrtrichtung, ihren äußeren Abmessungen und ihrem in Fahrtrichtung gesehenen Abstand zur Querförderschnecke, kann die Hüllfläche zur Gewährleistung eines nur geringen Abstandes zwischen dem rückwärtigen Bereich der Arbeitsorgane und der Querförderschnecke von kegel- oder wellenförmiger Gestalt sein, wobei der Hüllflächendurchmesser bei kegelförmiger Gestalt von außen nach innen oder umgekehrt zu- oder abnehmen kann. Bei nach innen zunehmendem Hüllflächendurchmesser ist außerdem gewährleistet, daß die zunehmende Erntegutmenge in größerwerden Gutförderräumen reibungs- und verschleißarm transportiert wird und im Mittelbereich der Querförderschnecke aufgrund des größeren Durchmessers zügiger nachfolgenden Arbeitsorganen zugeführbar ist.

Zur Verringerung des Herstellungsaufwandes kann in einer weiteren vorteilhaften Ausgestaltung der Grundkörper zylinderförmig, im einfachsten Fall als Zylinderrohr, ausgebildet sein und nur die Schneckengänge weisen bereichsweise unterschiedliche Höhe auf, sodaß erfindungsgemäß eine wenigstens teilweise ihren Querschnitt ändernde Hüllfläche entsteht.

Um Schwankungen in der Dicke der von der Querförderschnecke zu transportierenden Erntegutmatte zu vermeiden, kann in einer weiteren vorteilhaften Ausführung der Grundkörper der Querförderschnecke bereichsweise verschiedene Querschnitte aufweisen, wobei die Schneckengänge den Grundkörper mit konstanter Höhe umlaufen. Auf diese Weise bilden sich Guttransporträume konstanter Höhe zwischen den Schneckengängen der Querförderschnecke aus, die die aus im wesentlichen aufrechtstehenden Erntegutstengeln gebildete Erntegutmatte derart vergleichmäßigen, daß sich ein Erntegutstrom gleicher Dicke mit geringen Umwälzbewegungen zwischen den Erntegutstengeln ausbildet.

In einer weiteren vorteilhaften Ausgestaltung kann sich die Änderung der Form der Hüllfläche auch nur auf die für die Gutübergabe kritischen Endbereiche des Querförderorgans beschränken, sodaß auf konstruktiv einfache Weise ein sicheres Annehmen und Abtransportieren des Erntegutes durch das Querförderorgan gewährleistet ist, wobei ein nochmaliges Mitnehmen des Erntegutes durch die in diesen Endbereichen dem Querförderorgan vorgeordneten Arbeitsorgane vermieden wird.

Damit die mittige Weitergabe des Erntegutes an dem Querförderorgan nachgeordnete Arbeitsorgane eines Trägerfahrzeugs auf konstruktiv einfache Weise erfolgen kann, weisen die den Grundkörper umlaufenden Schneckengänge bereichsweise gegenläufige Steigung auf.

Um das durch die Schneckengänge transportierte Erntegut im Mittelbereich der Querförderschnecke staufrei an nachgeordnete Arbeitsorgane zu übergeben, können den Schneckengängen in diesem Bereich wellenförmige, senkrecht oder geneigt zur Drehachse der Querförderschnecke ausgerichtete Endscheiben zugeordnet sein, die das Neigen der Erntegutstengel und deren verstopfungsfreien Weitertransport in diesem Mittelbereich unterstützen.

Vorteilhafte Ausgestaltungen sind Gegenstand weiterer Unteransprüche und werden anhand eines in Zeichnungen dargestellten Ausführungsbeispiels näher erläutert.

Es zeigen
- Figur 1: einen erfindungsgemäßen Mäh- und Maiserntevorsatz in der Draufsicht
- Figur 2: einen weiteren erfindungsgemäßen Mäh- und Maiserntevorsatz in der Draufsicht
- Figur 3: einen weiteren erfindungsgemäßen Mäh- und Maiserntevorsatz in der Draufsicht
- Figur 4: eine Detailansicht eines erfindungsgemäßen Mäh- und Maiserntevorsatzes nach Figur 1 in der Draufsicht
- Figur 5: eine Detailansicht eines erfindungsgemäßen Mäh- und Maiserntevorsatzes nach Figur 3 in der Draufsicht.

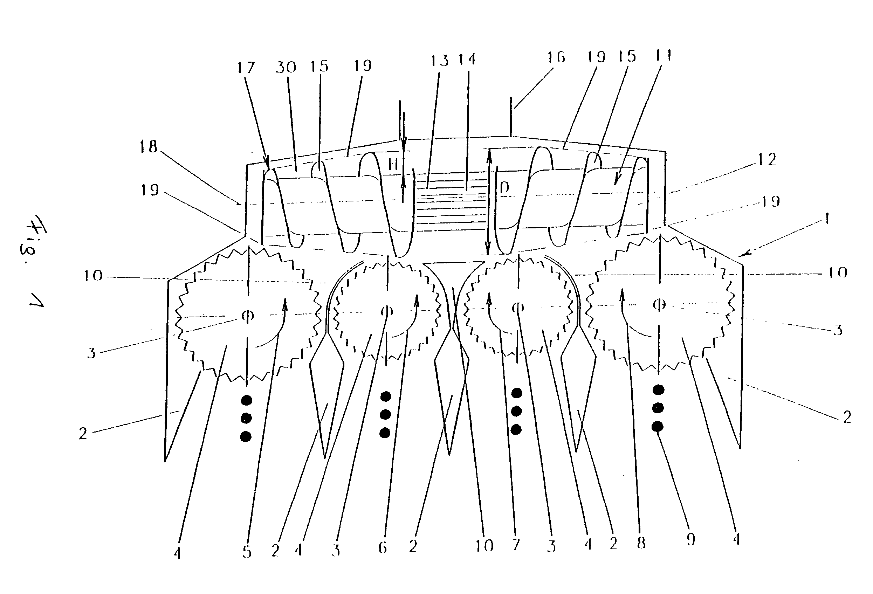

In Figur 1 ist schematisch ein Mäh- und Maiserntevorsatz 1 dargestellt, der in seinem Frontbereich in an sich bekannter Weise von Abteilern 2 getrennte, um annähernd vertikale Achsen 3 gemäß den Pfeilrichtungen 5-8 umlaufende Schneid- und Förderrotoren 4 aufnimmt, die das stengelige Erntegut 9 ernten und entlang von beliebig ausgeführten Stegen 10 in den rückwärtigen Bereich der Schneid- und Förderrotoren 4 fördern. In ihrem rückwärtigen Bereich ist den Schneid- und Förderrotoren 4 des Mäh- und Maiserntevorsatz 1 eine erfindungsgemäße Querförderschnecke 11 zugeordnet, die über einen zylindrischen Grundkörper 12 verfügt, dessen mittig angeordnetem, mit Förderstegen 13 versehenen Übergabebereich 14 Schneckengänge 15 aufweisende Seitenbereiche zugeordnet sind. Damit die Schneckengänge 15 das von ihnen zu fördernde Erntegut dem mittig angeordeneten Übergabebereich 14 zuführen können, weisen die jeweils rechts- und linksseitig vom Übergabebereich 14 angeordneten Schneckengänge 15 gegenläufige Steigungen auf. Im Übergabebereich 14 wird das von den Schneckengängen 15 zugeführte Erntegut in an sich bekannter und deshalb nicht näher dargestellter Weise von den Förderstegen 13 des Grundkörpers 12 erfaßt und nachfolgenden, nicht dargestellten Arbeitsorganen des nur schematisch angedeuteten Trägerfahrzeugs 16 zugeführt.

In dem in Figur 1 dargestellten Mäh- und Maiserntevorsatz 1 weisen die mittig angeordneten Schneid- und Förderrotoren 4 einen kleineren Durchmesser als die ihnen benachbarten äußeren Schneid- und Förderrotoren 4 auf. Damit erfindungsgemäß zwischen den Schneckengängen 15 und den vorgeordneten Arbeitsorganen 4, 10 zur sicheren Gutannahme durch die Schneckengänge 15 nur ein geringer Abstand erreicht wird, nimmt die Höhe H der Schneckengänge 15 über dem Grundkörper 12 in Richtung des mittigen Übergabebereiches 14 zu, sodaß die äußeren Kanten 17 der Schneckengänge 15 bei Drehung der Querförderschnecke 11 um Achse 18 eine zylinderförmige Hüllfläche 19 beschreiben, deren Hüllflächendurchmesser D in Richtung des mittigen Übergabebereiches 14 zunimmt.

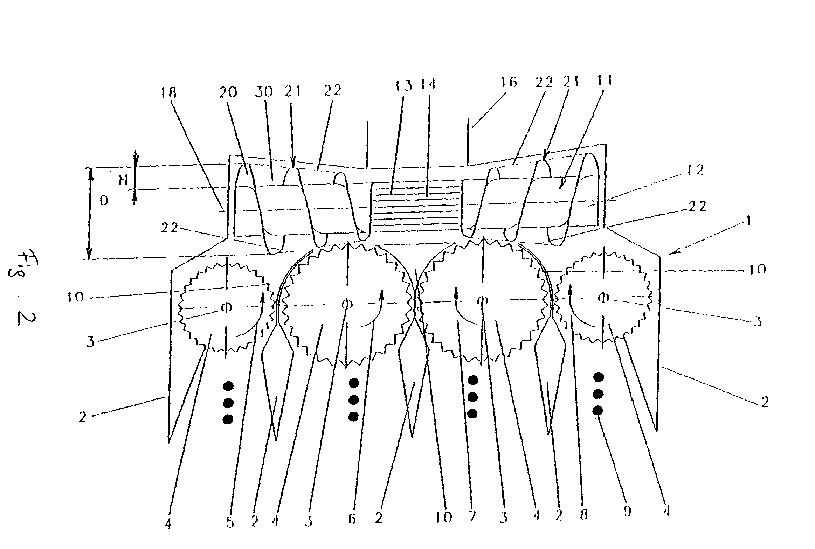

Verfügt der Mäh- und Maiserntevorsatz 1 gemäß Figur 2 über Schneid- und Förderrotoren 4, deren mittig angeordneten Schneid- und Förderotoren 4 im Vergleich zu den benachbarten äußeren Schneid- und Förderrotoren 4 den größeren Durchmesser aufweisen muß die Höhe H der Schneckengänge 20 über dem Grundkörper 12 in Richtung des mittigen Übergabebereiches 14 abnehmen, damit die durch die äußeren Kanten 21 der Schneckengänge 20 beschriebenen Hüllflächen 22 erfindungsgemäß mit geringem Abstand zu den Arbeitsorganen 4 angeordnet sind. Bei einer derartigen Ausführung beschreiben die äußeren Kanten 21 der Schneckengänge 20 somit kegelförmige Hüllflächen 22, deren Hüllflächendurchmesser D in Richtung des mittigen Übergabebereiches 14 abnimmt.

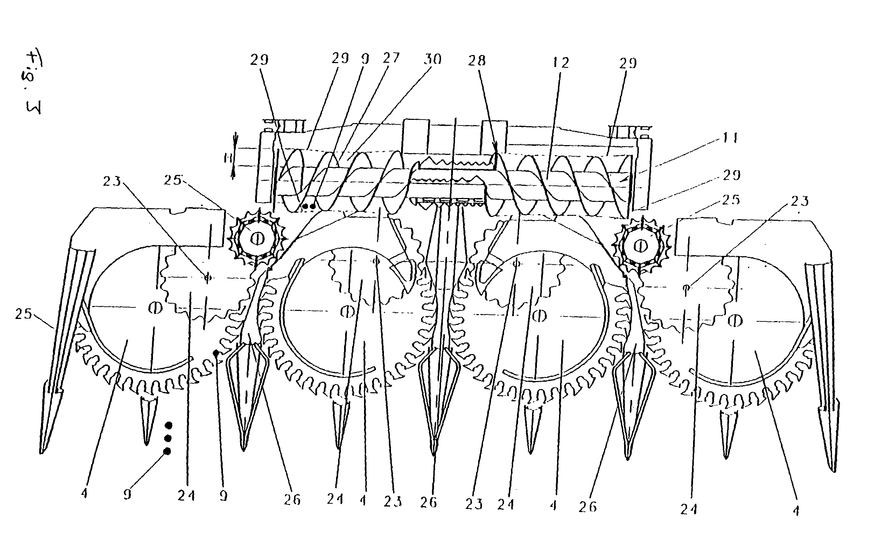

In einer weiteren erfindungsgemäßen Ausführungsform können den Schneid- und Förderrotoren 4 entsprechend Figur 3 im rückwärtigen Bereich um vertikale Achsen 23 umlaufende Ausräumer 24 zugeordnet sein, die das in den Fördertaschen 25 befindliche Erntegut 9 aus diesen herausbewegen und einer erfindungsgemäßen Querförderschnecke 11 zuführen. In Abhängigkeit von der zu überbrückenden Distanz zwischen dem rückwärtigen Bereich der Ausräumer 24 und der Querförderschnecke 11 können den Ausräumern 24 weitere Zwischenförderelemente 25 zugeordnet sein, die das Erntegut 9 übernehmen und der Querförderschnecke 11 zuführen. Damit im Bereich der Arbeitsorgane 4, 24, 25 ein sicherer Guttransport gewährleistet wird, können den Arbeitsorganen 4, 24, 25 Förderstege 26 zugeordnet sein, die ein Heraustreten der Erntegutstengel 9 aus den Arbeitsorganen 4, 24, 25 verhindern. Damit erfindungsgemäß wiederum ein geringer Abstand zwischen dem rückwärtigen Bereich der Arbeitsorgane 4, 24, 25, 26 und den Schneckengängen 27 des zylinderförmigen Grundkörpers 12 der Querförderschnecke 11 erreicht wird, ändert sich bei einer derartigen Ausführung die Höhe H der Schneckengänge 27 über dem Grundkörper 12 in der Weise, daß die äußeren Kanten 28 der Schneckengänge 27 wellenförmige Hüllflächen 29 beschreiben.

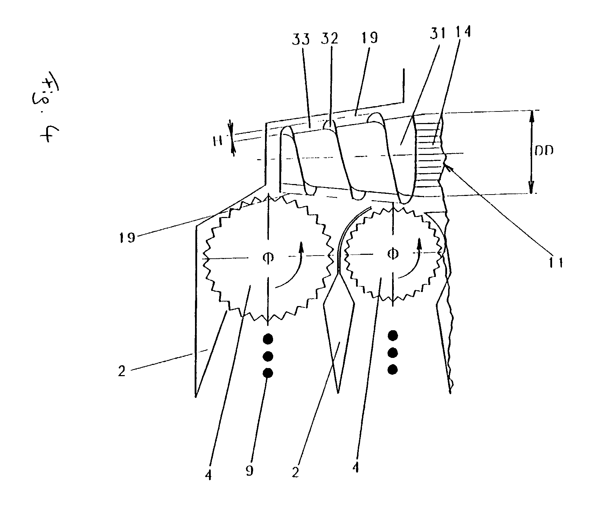

Aufgrund dessen, daß in den beschriebenen Ausführungsbeispielen die Grundkörper 12 der Querförderschnecken 11 zylindrische Gestalt aufweisen und die Höhe H der Schneckengänge 15, 20, 27 sich in Abhängigkeit von der Geometrie und der Anordnung der Arbeitsorgane 4, 10, 24, 25, 26 ändert, weisen die von den Schneckengängen 15, 20, 27 und dem Grundkörper 12 gebildeten Guttransporträume 30 unterschiedliche Größe auf, die mitunter zu verstärkten Umwälzvorgängen zwischen den in den Guttransporträumen 30 befindlichen Erntegutstengeln 9 führen, vorallem dann, wenn sich die Höhe H der Schneckengänge 15, 20, 27 stark verringert, sodaß es zu einer deutlichen Verkleinerung des Guttransportraumes 30 kommt. Dem Abhilfe schaffend, kann in einer weiteren vorteilhaften Ausführungsform die kegel- oder wellenartige Form der Hüllflächen 19, 22, 29 dadurch erreicht werden, daß der jeweilige Grundkörper 12, 31 kegel- oder wellenförmig gestaltet ist, wobei in Figur 4 vereinfachend nur ein kegelförmiger Grundkörper 31 dargestellt wird, und die den jeweiligen Grundkörper 31 umgebenden Schneckengänge 32 konstante Höhe H aufweisen, sodaß die sich ergebenden Guttransporträume 33 alle die gleiche Höhe besitzen. Auf diese Weise werden die Umwälzvorgänge zwischen den Erntegutstengeln 9 eines Guttransporttraumes 33 aufgrund von Höhenänderungen des Guttransportraumes 33 vermieden, was schließlich zu einer Reduzierung des für den Antrieb der Querförderschnecke 11 notwendigen Energiebedarfs führt. Wird der Grundkörper 31 wie in Figur 4 dargestellt, in der Weise kegelig ausgeführt, daß der Durchmesser des Grundkörpers 31 in Richtung des mittigen Übergabebereiches 14 ansteigt, wird auf konstruktiv einfache Weise ein großer Durchmesser DD des Durchzugsbereiches 14 erreicht, sodaß die an nachgeordnete Arbeitsorgane zu übergebende Erntegutmenge gutstauminimierend mit höherer Geschwindigkeit abgefördert werden kann.

Es liegt im Rahmen der Erfindung, daß die erfindungsgemäße Querförderschnecke 11 in nicht dargestellter Weise auch so ausgeführt sein kann, daß sich sowohl der Querschnitt des Grundkörpers 12, 31 als auch die Höhe der Schneckengänge 15, 20, 27, 32 ändern kann um die beschriebenen Effekte zu erzielen.

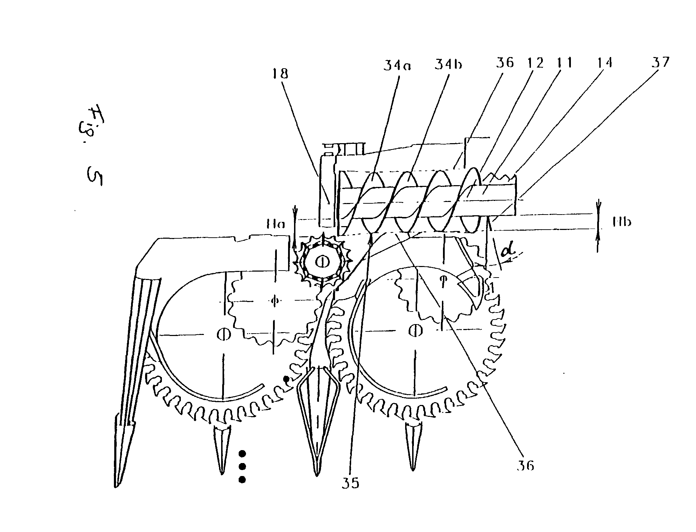

Aufgrund dessen, daß Gutannahmeprobleme in der Regel in den Randbereichen der den Arbeitsorganen 4, 24, 25 nachgeordneten Querförderschnecke 11 in der Weise auftreten, daß das Erntegut von den Arbeitsorganen 25 wieder aus dem Bereich der Querförderschnecke 11 herausgefördert und verstopfungsverursachend nochmals dem vorhergehenden Arbeitsorgan 24 zugeführt wird, können in einer weiteren vorteilhaften Ausführungsform entsprechend Figur 5 nur die jeweils äußeren Schneckengänge 34a eine gegenüber den inneren Schneckengängen 34b größere Höhe Hₐ über dem Grundkörper 12 aufweisen, sodaß die äußeren Kanten 35 der Schneckengänge 34a, b eine zylindrische Hüllfläche 36 ausbilden, die sich nur im Endbereich der Querförderschnecke kegelförmig öffnet. Es liegt im Rahmen der Erfindung, daß die in Figur 5 gezeigte Form der Hüllfläche 36 auch dadurch erreicht werden kann, daß der Grundkörper 12 in den Randbereichen der Querförderschnecke 11 kegelförmig aufgeweitet ist und die Schneckengänge 34 über der gesamten Breite der Querförderschnecke 11 konstante Höhe H_{b} aufweisen.

Damit die von den Schneckengängen 15, 20, 27, 32, 34 geförderten Erntegutstengel 9 sicher an den Übergabebereich 14 des Grundkörpers 12, 31 übergeben werden und von diesem nachgeordneten Arbeitsorganen verstopfungsfrei zuführbar sind, können die Schneckengänge 15, 20, 27, 32, 34 übergabebereichsseitig in an sich bekannter Weise in wellenförmige Endscheiben 37 übergehen, die senkrecht oder wie in Figur 5 dargestellt, unter einem Winkel α geneigt zur Drehachse 18 der Querförderschnecke 11 auf dem Walzengrundkörper 12 angeordnet sind.

### Bezugszeichenliste

- 1: Mäh- oder Maiserntevorsatz
- 2: Abteiler
- 3: vertikale Achse
- 4: Schneid- und Förderrotor
- 5: Pfeilrichtung
- 6: Pfeilrichtung
- 7: Pfeilrichtung
- 8: Pfeilrichtung
- 9: Erntegut
- 10: Steg
- 11: Querförderschnecke
- 12: Grundkörper
- 13: Fördersteg
- 14: Übergabebereich
- 15: Schneckengang
- 16: Trägerfahrzeug
- 17: äußere Kante
- 18: Achse
- 19: Hüllfläche
- 20: Schneckengang
- 21: äußere Kante
- 22: Hüllfläche
- 23: vertikale Achse
- 24: Ausräumer
- 25: Fördertasche
- 26: Fördersteg
- 27: Schneckengang
- 28: äußere Kante
- 29: Hüllfläche
- 30: Guttransportraum
- 31: Grundkörper
- 32: Schneckengang
- 33: Guttransportraum
- 34a,b: Schneckengang
- 35: äußerer Kante
- 36: Hüllfläche
- 37: Endscheibe

- D: Durchmesser
- DD: Durchmesser
- FR: Fahrtrichtung
- H: Höhe
- Hₐ: Höhe
- H_{b}: Höhe
- α: Winkel

## Patentansprüche

1. Querförderschnecke für einen Mäh- und Erntevorsatz mit einem Grundkörper und diesem zugeordneten Schneckengängen, wobei den Schneckengängen in Fahrtrichtung Arbeitsorgane zum Mähen und/oder Transportieren des Erntegutes vorgeordnet sind und der mit Schneckengängen versehene Grundkörper um eine quer zur Fahrtrichtung angeordnete Drehachse umläuft,
**dadurch gekennzeichnet,**
**dass** die radial außenliegenden Kanten (17, 21, 28, 35) der Schneckengänge (15, 20, 27, 32, 34a, 34b) des Grundkörpers (12, 31) im Bereich der vorgeordneten Arbeitsorgane zum Mähen und/oder Transportieren (4, 24, 25) des Erntegutes (9) eine sich wenigstens teilweise in ihrem Querschnitt ändernde Hüllfläche (19, 22, 29, 36) beschreiben.

2. Querförderschnecke für einen Mäh- oder Maiserntevorsatz nach Anspruch 1,
**dadurch gekennzeichnet,**
**daß** die durch die Schneckengänge (15, 20, 27, 32, 34a, 34b) beschriebene Hüllfläche (19, 22, 29, 36) der Außenkontur des rückwärtigen Bereiches der vorgeordneten Arbeitsorgane (4, 10, 24, 25, 26) mit geringem Abstand folgt.

3. Querförderschnecke für einen Mäh- oder Maiserntevorsatz nach einem oder mehreren der vorhergehenden Ansprüche,
**dadurch gekennzeichnet,**
**daß** die Schneckengänge (15) des Grundkörpers (12) eine kegelförmige Hüllfläche (19) ausbilden und der Hüllflächendurchmesser (D) von außen nach innen zunimmt.

4. Querförderschnecke für einen Mäh- oder Maiserntevorsatz nach einem oder mehreren der vorhergehenden Ansprüche,
**dadurch gekennzeichnet,**
**daß** die Schneckengänge (27) des Grundkörpers (12) eine wellenförmige Hüllfläche (29) ausbilden.

5. Querförderschnecke für einen Mäh- oder Maiserntevorsatz nach einem oder mehreren der vorhergehenden Ansprüche,
**dadurch gekennzeichnet,**
**daß** die Schneckengänge (20) des Grundkörpers (12) eine kegelförmige Hüllfläche (22) ausbilden und der Hüllflächendurchmesser (D) von außen nach innen abnimmt.

6. Querförderschnecke für einen Mäh- oder Maiserntevorsatz nach einem oder mehreren der vorhergehenden Ansprüche,
**dadurch gekennzeichnet,**
**daß** der Grundkörper (12) zylinderförmig ausgebildet ist und die Schneckengänge (15, 20, 27, 34a, 34b) bereichsweise verschiedene Höhen (H, Hₐ, H_{b}) aufweisen.

7. Querförderschnecke für einen Mäh- oder Maiserntevorsatz nach einem oder mehreren der Ansprüche 1 bis 5,
**dadurch gekennzeichnet,**
**daß** der Grundkörper (31) bereichsweise verschiedene Querschnitte aufweist und die Schneckengänge (32) den Grundkörper (31) mit konstanter Höhe (H) umlaufen.

8. Querförderschnecke für einen Mäh- oder Maiserntevorsatz nach einem oder mehreren der Ansprüche 1 bis 5,
**dadurch gekennzeichnet,**
**daß** der Grundkörper (12, 31) bereichsweise verschiedene Querschnitte aufweist und die Schneckengänge (15, 20, 27, 32, 34a, 34b) bereichsweise verschiedene Höhen (H, Hₐ, H_{b}) aufweisen.

9. Querförderschnecke für einen Mäh- oder Maiserntevorsatz nach einem oder mehreren der vorhergehenden Ansprüche,
**dadurch gekennzeichnet,**
**daß** sich die Form der Hüllfläche (36) nur in den Endbereichen des Grundkörpers (12) ändert.

10. Querförderschnecke für einen Mäh- oder Maiserntevorsatz nach Anspruch 9,
**dadurch gekennzeichnet,**
**daß** die Änderung der Form der Hüllfläche (36) in den Endbereichen des Grundkörpers (12) durch eine Zu- oder Abnahme der Höhe (Hₐ, H_{b}) der Schneckengänge (34a, 34b) und/oder durch eine Querschnittsänderung des Grundkörpers (12) erreicht wird.

11. Querförderschnecke für einen Mäh- oder Maiserntevorsatz nach einem oder mehreren der vorhergehenden Ansprüche,
**dadurch gekennzeichnet,**
**daß** die Schneckengänge (15, 20, 27, 32, 34a, 34b) bereichsweise gegenläufige Steigung aufweisen.

12. Querförderschnecke für einen Mäh- oder Maiserntevorsatz nach Anspruch 11,
**dadurch gekennzeichnet,**
**daß** den bereichsweise gegenläufige Steigung aufweisenden Schneckengängen (15, 20, 27, 32, 34a, 34b) innenseitig wellenförmige oder ebene Endscheiben (37) zugeordnet sind, die senkrecht oder um einen Winkel (α) geneigt zur Drehachse (18) des Grundkörpers (12) angeordnet sind.

## Claims

1. A transverse conveyor screw for a front-mounted cutting and harvesting implement comprising a main body and screw flights associated therewith, wherein working members for cutting and/or transporting the crop material are arranged in front of the screw flights and the main body provided with screw flights rotates about an axis of rotation arranged transversely with respect to the direction of travel, **characterised in that** the radially outward edges (17, 21, 28, 35) of the screw flights (15, 20, 27, 32, 34a, 34b) of the main body (12, 31), in the region of the working members arranged in front thereof for cutting and/or transporting (4, 24, 25) the crop material (9), describe an envelope surface (19, 22, 29, 36) which at least partially changes in its cross-section.

2. A transverse conveyor screw for a front-mounted cutting or corn harvesting implement according to claim 1 **characterised in that** the envelope surface (19, 22, 29, 36) described by the screw flights (15, 20, 27, 32, 34a, 34b) follows the outside contour of the rearward region of the working members (4, 10, 24, 25, 26) arranged in front thereof, at a small spacing.

3. A transverse conveyor screw for a front-mounted cutting or corn harvesting implement according to one or more of the preceding claims **characterised in that** the screw flights (15) of the main body (12) form a conical envelope surface (19) and the envelope surface diameter (D) increases from the outside inwardly.

4. A transverse conveyor screw for a front-mounted cutting or corn harvesting implement according to one or more of the preceding claims **characterised in that** the screw flights (27) of the main body (12) form a wave-shaped envelope surface (29).

5. A transverse conveyor screw for a front-mounted cutting or corn harvesting implement according to one or more of the preceding claims **characterised in that** the screw flights (20) of the main body (12) form a conical envelope surface (22) and the envelope surface diameter (D) decreases from the outside inwardly.

6. A transverse conveyor screw for a front-mounted cutting or corn harvesting implement according to one or more of the preceding claims **characterised in that** the main body (12) is of a cylindrical configuration and the screw flights (15, 20, 27, 34a, 34b) are of heights (H, Hₐ, H_{b}) which are different region-wise.

7. A transverse conveyor screw for a front-mounted cutting or corn harvesting implement according to one or more of claims I to 5 **characterised in that** the main body (31) has cross-sections which are different region-wise and the screw flights (32) extend around the main body (31) at a constant height (H).

8. A transverse conveyor screw for a front-mounted cutting or corn harvesting implement according to one or more of claims 1 to 5 **characterised in that** the main body (12, 31) has cross-sections which are different region-wise and the screw flights (25, 20, 27, 32, 34a, 34b) are of heights (H, Hₐ, H_{b}) which are different region-wise.

9. A transverse conveyor screw for a front-mounted cutting or corn harvesting implement according to one or more of the preceding claims **characterised in that** the shape of the envelope surface (36) changes only in the end regions of the main body (12).

10. A transverse conveyor screw for a front-mounted cutting or corn harvesting implement according to claim 9 **characterised in that** the change in the shape of the envelope surface (36) in the end regions of the main body (12) is achieved by an increase or a reduction in the height (Hₐ, H_{b}) of the screw flights (34a, 34b) and/or by a change in the cross-section of the main body (12).

11. A transverse conveyor screw for a front-mounted cutting or corn harvesting implement according to one or more of the preceding claims **characterised in that** the screw flights (15, 20, 27, 32, 34a, 34b) are of a region-wise opposite pitch.

12. A transverse conveyor screw for a front-mounted cutting or corn harvesting implement according to claim 11 **characterised in that** associated at the inward side with the screw flights (15, 20, 27, 32, 34a, 34b) of region-wise opposite pitch are wave-shaped or flat end discs (37) which are arranged perpendicularly or inclinedly at an angle (α) with respect to the axis of rotation (18) of the main body (12).

## Revendications

1. Vis de transport transversale pour un outil frontal de moissonnage ou de récolte, comportant un corps de base et des spires de vis associées à celui-ci, des organes de travail pour moissonner et/ou transporter le produit récolté étant disposé avant les spires de vis, vu dans la direction de déplacement et le corps de base pourvu des spires de vis tournant autour d'un axe de rotation disposé transversalement à la direction de transport, **caractérisé en ce que** les arêtes (17, 21, 28, 35) situées radialement à l'extérieur des spires de vis (15, 20, 27, 32, 34a, 34b) du corps de base (12, 31), dans la région des organes de travail avancés (4, 24, 25) de moissonnage et/ou de transport du produit récolté (9), décrivent une surface enveloppe (19, 22, 29, 36), dont la section transversale varie au moins partiellement.

2. Vis de transport transversale pour un outil frontal de moissonnage ou de récolte de maïs selon la revendication 1, **caractérisé en ce que** la surface enveloppe (19, 22, 29, 36) décrite par les spires de vis (15, 20, 27, 32, 34a, 34b) suit le contour extérieur de la partie postérieure des organes de travail avancés (4, 24, 25).

3. Vis de transport transversale pour un outil frontal de moissonnage ou de récolte de maïs selon une ou plusieurs des revendications précédentes, **caractérisé en ce que** les spires de vis (15) du corps de base (12) définissent une surface enveloppe (19) conique, et **en ce que** le diamètre (D) de la surface enveloppe croît de l'extérieur vers l'intérieur.

4. Vis de transport transversale pour un outil frontal de moissonnage ou de récolte de maïs selon une ou plusieurs des revendications précédentes, **caractérisé en ce que** les spires de vis (27) du corps de base (12) définissent une surface enveloppe (29) en forme d'onde.

5. Vis de transport transversale pour un outil frontal de moissonnage ou de récolte de maïs selon une ou plusieurs des revendications précédentes, **caractérisé en ce que** les spires de vis (15) du corps de base (12) définissent une surface enveloppe (22) conique et **en ce que** le diamètre (D) de la surface enveloppe décroît de l'extérieur vers l'intérieur.

6. Vis de transport transversale pour un outil frontal de moissonnage ou de récolte de maïs selon une ou plusieurs des revendications précédentes, **caractérisé en ce que** le corps de base (12) est cylindrique et les spires de vis (15, 20, 27, 34a, 34b) présentent localement des hauteurs (H, Hₐ, H_{b}) différentes.

7. Vis de transport transversale pour un outil frontal de moissonnage ou de récolte de maïs selon une ou plusieurs des revendications 1 à 5, **caractérisé en ce que** le corps de base (31), localement, présente des sections différentes et les spires de vis (32) s'enroulent autour du corps de base (31) avec une hauteur constante (H).

8. Vis de transport transversale pour un outil frontal de moissonnage ou de récolte de maïs selon une ou plusieurs des revendications 1 à 5, **caractérisé en ce que** le corps de base (12), localement, présente des sections différentes et les spires de vis (15, 20, 27, 32, 34a, 34b) présentent localement des hauteurs (H, Hₐ, H_{b}) différentes.

9. Vis de transport transversale pour un outil frontal de moissonnage ou de récolte de maïs selon une ou plusieurs des revendications précédentes, **caractérisé en ce que** la forme de la surface enveloppe (36) varie seulement dans les zones d'extrémité du corps de base (12).

10. Vis de transport transversale pour un outil frontal de moissonnage ou de récolte de maïs selon la revendication 9, **caractérisé en ce que** le changement de la forme de la surface enveloppe (36) dans les zones d'extrémité du corps de base (12) est obtenu par une augmentation ou une diminution de la hauteur (Hₐ, H_{b}) des spires de vis (34a, 34b) et/ou un changement de section transversale du corps de base (12).

11. Vis de transport transversale pour un, outil frontal de moissonnage ou de récolte de maïs selon une ou plusieurs des revendications précédentes, **caractérisé en ce que** les spires de vis (15, 20, 27, 32 34a, 34b), localement, présentent des pas opposés.

12. Vis de transport transversale pour un outil frontal de moissonnage ou de récolte de maïs selon la revendication 11, **caractérisé en ce qu'**aux spires de vis (15, 20, 27, 32 34a, 34b), avec localement des pas opposés sont associés des flasques d'extrémité (37) pourvus d'une ondulation intérieure ou plans, qui sont disposés perpendiculairement ou sont inclinés sous un angle α par rapport à l'axe de rotation (18) du corps de base (12).
